# EUROPEAN PATENT SPECIFICATION

(11) **EP 1 378 688 B1**
(45) Date of publication and mention of the grant of the patent: **30.12.2009**
(21) Application number: 03000680.3
(22) Date of filing: 16.01.2003
(51) Int. Cl.: F16H 61/22

(54) **Shift locking apparatus for automatic transmission of vehicle**
Schaltsperreinrichtung für Automatikgetriebe
Dispositif de verrouillage pour boîte de vitesse automatique

(30) Priority: 03.07.2002 KR 2002038388
(43) Date of publication of application: 07.01.2004
(73) Proprietor: KIA MOTORS CORPORATION, Seocho-gu, Seoul (KR)
(72) Inventor: Kim, Sang-jin, Jangan-gu, Suwon-shi, Kyunggi-do (KR)
(74) Representative: Viering, Jentschura & Partner

(56) References cited:
- US-A- 4 905 802
- US-A- 5 860 303
- US-A- 5 996 763
- PATENT ABSTRACTS OF JAPAN vol. 0133, no. 60 (M-858), 11 August 1989 (1989-08-11) & JP 1 119425 A (TOYOTA MOTOR CORP; others: 01), 11 May 1989 (1989-05-11)

## Description

### Field of the Invention

The present invention relates to a shift locking apparatus for an automatic transmission. More specifically, the present invention is directed to a shift locking apparatus for an automatic transmission capable of simultaneously providing either a shift locking function or a key locking function by means of a relatively simple mechanical construction in an automatic transmission vehicle with a shift lever, in particular a column-type shift lever.

### Description of the Prior Art

A shift locking apparatus is known from JP 1119425 A, US-A-5 996 763 or US-A-5 860 303. A shift locking apparatus according to the preamble of claim 1 is disclosed in US-A-4 905 802.

In an automatic transmission vehicle, a wide variety of safety devices have recently been applied to avoid dangerous factors, for example a sudden acceleration accident resulting from unskilled manipulation of a vehicle's driver, a malfunction of a vehicle in itself, and the like. In order to avoid such dangerous factors, a shift locking apparatus or a key locking apparatus has generally been used as the safety device.

Such a shift locking apparatus is provided in order to preclude possible dangerous factors resulting from improper manipulation of a break pedal or an acceleration pedal, preventing a vehicle's driver from performing a speed change manipulation without stepping on the break pedal when a shift lever is placed in the parking position for a vehicle ignition.

On the one hand, the key locking apparatus is provided to connect to a key unit in an automatic transmission vehicle, allowing the key to be drawn out only when the shift lever is in the parking position for vehicular parking. With this key locking apparatus, a dangerous situation can be prevented which may be generated from an undesired manipulation in the course of parking the automatic transmission vehicle.

For the shift locking apparatus as above mentioned, an electrical driving apparatus, such as a solenoid or an actuator, has been typically used. A key locking apparatus is generally installed separate from a shift locking apparatus.

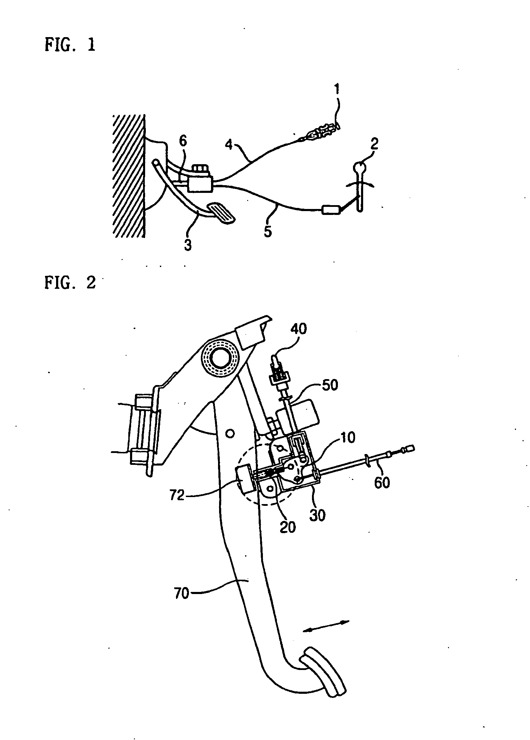

Fig. 1 is a construction diagram illustrating one example for a conventional shift locking apparatus in an automatic transmission vehicle.

As above mentioned, the shift locking apparatus allows a shift lever 2 to shift from a parking position P into another position in the speed change range only when a break pedal 3 is stepped on, while the key locking apparatus allows a starting key 1 to be drawn out only when the shift lever 2 is in the parking position P after a driver turns the starting key into the off mode.

Of reference numerals not described, 4 indicates a key lock cable, 5 indicates a shift lock cable, and 6 indicates a break coupling rod.

In general, the conventional shift locking apparatus and key locking apparatus are designed to operate electrically. There is a drawback in that an actuator, as a main component in the respective apparatuses, is highly expensive and thus overall production cost is increased.

Furthermore, there is another drawback in that because the actuator is operated by electricity, the actuator cannot be operated when the battery in the vehicle is not sufficiently charged.

The key locking apparatus and the shift locking apparatus are typically operated independently relative to each other. Therefore, there is yet another drawback in that the number of respective construction components is increased, and thus the production cost is increased and the production process is complicated.

### SUMMARY OF THE INVENTION

Accordingly, the present invention has been made to solve the above-mentioned problems occurring in the prior art, and an object of the present invention is to provide a shift locking apparatus for an automatic transmission capable of simultaneously providing either a shift locking function or a key locking function using a relatively simple mechanical construction in an automatic transmission vehicle with a shift lever, in particular a column-type shift lever.

In order to accomplish this object, there is provided a shift locking apparatus for an automatic transmission having the features of claim 1, comprising a lock cam for connecting, along its circumference, to a shift lock cable on one part, and to a key lock cable on another part, and provided with a latching step on a third part; a latching means, allowed to move forward or backward by a contact force of a break pedal or by an elastic force of at least one spring, for having at least another spring to perform a retraction or extension and causing the latching step of the lock cam to be latched or unlatched depending on the engaged or disengaged state of the break pedal and on a pivotal movement of the lock cam; a casing, housed by the lock cam and the latching means therein, for constraining the lock cam within a pivotal angle of the latched state or unlatched state and restraining the latching means to be in a retracted or extended state; and a shift lock pin, allowed to move forward or backward by a contact force of a shift lever or by an elastic force of at least one spring, for cooperating with the lock cam via the shift lock cable to lock or release the shift lever in a parking position.

In one aspect of the present invention, it is
characterized in that the latching means further comprises a stopper pin placed into a reverse or backward position under the contact force from the break pedal when the break pedal is disengaged, but into a progressive or forward position under the elastic force from the first spring when the break pedal is engaged; and a cylinder housing a piston which is integrally connected with the stopper pin, having a second spring which is disposed between a free end of the piston and a closed end of the cylinder opposite to the free end of the piston and having a spring constant larger than that of the first spring, provided with the elastic force of the second spring toward the cam when the break pedal is disengaged, and moved closely toward the stopper pin when the break pedal is engaged.

In another aspect of the present invention, it is characterized in that the cylinder causes the lock cam to be in the latched or unlatched state depending on the pivotal movement of the lock cam.

In yet another aspect of the present invention, it is characterized in that a distance in which the stopper pin is traveled together with the cylinder by the elastic force of the first spring, is the same as that in which the cylinder is traveled by the elastic force of the second spring.

In yet still another aspect of the present invention, it is characterized in that the shift lock pin is provided with the elastic force directing to the forward position by a third spring and with the contact force directing to the backward position by a shift lever.

In yet still another aspect of the present invention, it is characterized in that the lock cam is pivoted into the latched state when the shift lock pin is in the forward or extended position but into the unlatched state when the shift lock pin is in the backward or retracted position.

In yet still another aspect of the present invention, it is characterized in that the shift lock pin causes the shift lever to be locked in a parking position when the shift lock pin is in the forward position but to be movably released in another position in a speed change range when the shift lock pin is in the backward position.

In yet still another aspect of the present invention, it is characterized in that the lock cable is connected to a key unit, allowing the lock cam to be pivoted from the latched state into the unlatched state only when the key unit is operated to put a key out of a locked position.

In yet still another aspect of the present invention, it is characterized in that the lock cable is connected to a key unit, allowing a key to be put into a locked position by transmitting the latched state of the lock cam into the key unit.

### BRIEF DESCRIPTION OF THE DRAWINGS

The above and other objects, features and advantages of the present invention will be more apparent from the following detailed description taken in conjunction with the accompanying drawings, in which:
Fig. 1 is schematic constructional view showing one example of a shift locking apparatus for a conventional automatic transmission;
Fig. 2 is a schematic side sectional view of a shift locking apparatus according to one embodiment of the present invention;
Fig. 3 is a detailed sectional view of a break pedal stopper of the shift locking apparatus shown in Fig. 2;
Fig. 4a is a detailed sectional view of a key unit of the shift locking apparatus shown in Fig. 2;
Fig. 4b is a detailed sectional view of a shift lever of the shift locking apparatus shown in Fig. 2; and
Figs. 5a to 5c are operation views of the shift locking apparatus shown in Fig. 2.

### DETAILED DESCRIPTION OF THE PREFERRED EMBODIMENTS

Hereinafter, a preferred embodiment of the present invention will be described with reference to the accompanying drawings. In the following description and drawings, the same reference numerals are used to designate the same or similar components, and so repetition of the description on the same or similar components will be omitted.

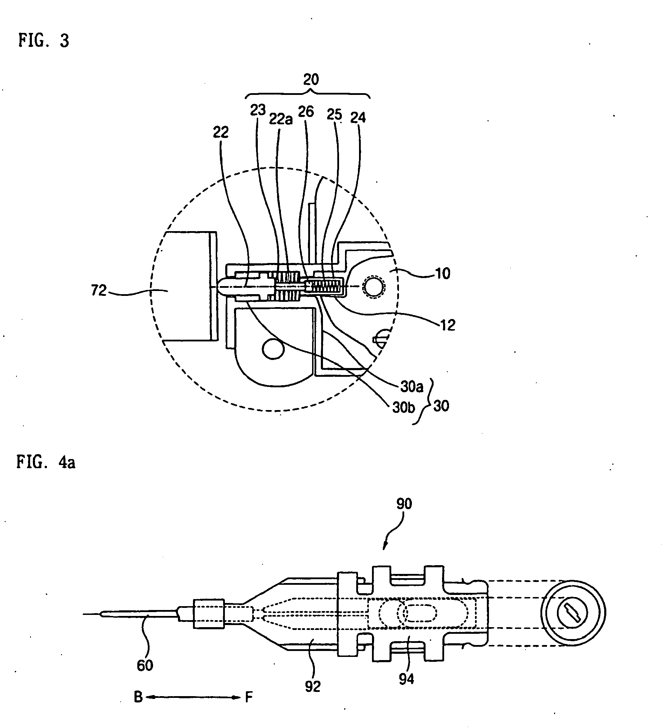

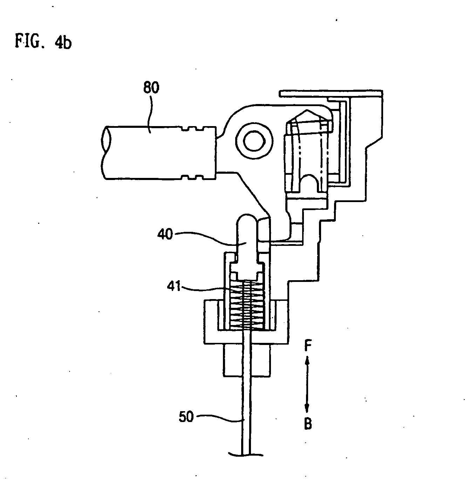

Fig. 2 is a schematic side sectional view of a shift locking apparatus according to one embodiment of the present invention, Fig. 3 is a detailed sectional view of a break pedal stopper of the shift locking apparatus shown in Fig. 2, Fig. 4a is a detailed sectional view of a key unit of the shift locking apparatus shown in Fig. 2, and Fig. 4b is a detailed sectional view of a shift lever of the shift locking apparatus shown in Fig. 2.

A shift locking apparatus according to the present invention includes a lock cam 10 connected to both a shift lock cable 50 and a key lock cable 60, and a latching means 20 cooperating with the lock cam 10 and causing the lock cam 10 to be in a latched or unlatched state depending on an engaged or disengaged state of a break pedal 70.

The shift locking apparatus further comprises a casing 30 receiving both the lock cam 10 and the latching means 20 therein and fastening them to a vehicular chassis, and a shift lock pin 40 cooperating with the lock cam 10 via the shift lock cable 50 and locking or releasing the shift lever 80 in or from a parking position.

As shown, the lock cam 10 is connected to, along its circumference, the lock cable 50 on one part and to the key lock cable 60 on a second part, and provided with a latching step 12 on a third part.

As described below, the latching step 12 has a step-like shape so that one end of the latching means can be placed on or out of the latching step. The latching step 12 allows the lock cam 10 to be pivoted and maintained in the illustrated latched state L or unlatched state U.

The latching means 20 is pushed against or released from a pedal stopper 72 provided on one side of the break pedal 70 depending on the engaged or disengaged state of the break pedal 70. As shown, when the break pedal 70 is disengaged, the latching means 20 is pushed against a pedal stopper 72. On the contrary, when the break pedal 70 is engaged, the latching means 20 is released from a pedal stopper 72.

With this construction, the latching means 20 is subjected to a contact force of the pedal stopper 72 when the latching means is pushed against a pedal stopper 72, but to an elastic force of a first spring 23 when the latching means 20 is released from a pedal stopper 72. Therefore, the latching means is allowed to move forward or backward, changing its total length by retraction or extension of a second spring 25.

Both the forward or backward movement and the retracting or extending movement in the latching means 20 are achieved depending on the engaged or disengaged state of the break pedal 70 and on the pivotal movement of the lock cam 10, so that the two movements of the latching means 20 function to maintain the latching step 12 of the lock cam 10 in the latched state L or in the unlatched state U.

More specifically, the latching means 20 further comprises a stopper pin 22 and a cylinder 24.

The stopper pin 22 is placed in a reverse or backward position B under the contact force of the break pedal 70 when the break pedal 70 is disengaged, but in a progressive or forward position F under the elastic force of the first spring 23 when the break pedal 70 is engaged.

The cylinder 24 has a piston 26 which is integrally connected with the stopper pin 22 via an intermediate bar 22a and housed within the cylinder 24. The second spring 25 is disposed between a free end of the piston 26 and a closed end of the cylinder 24 opposite to the free end of the piston 26 and has a spring constant larger than that of the first spring 23.

According to this construction, the cylinder 24 is subjected to the elastic force of the second spring 25 directing to the lock cam 10 when the break pedal 70 is disengaged. On the contrary, the cylinder 24 moves forward together with the stopper pin 22 by the elastic force of the first spring 23 when the break pedal 70 is in the engaged state.

Therefore, when the break pedal 70 is disengaged and the lock cam 10 is latched, the cylinder 24 is placed on the latching step 12 of the lock cam 10. When the break pedal 70 is engaged again, the cylinder 24 moves toward together with the stopper pin 22 only to place out of the latching step 12 of the lock cam 10, and thereby allowing the lock cam 10 to be pivoted into the unlatched state U.

On the one hand, the distance which the stopper pin 22 is caused to travel together with the cylinder 24 by the elastic force of the first spring 23, can be the same as that which the cylinder 24 is caused to travel by the elastic force of the second spring 25. As a result, the lock cam 10 can be easily latched or unlatched as mentioned above.

The lock cam 10 and the latching means 20 are housed within the casing 30 and fastened to a vehicular chassis.

The casing 30 includes a first container 30a for receiving the lock cam and a second container 30b for receiving the latching means 20, in which the first container 30a, on which a rotatable shaft of the lock cam is mounted, constrains the lock cam from pivoting beyond a certain angle for the latched state L and the unlatched state U. The second container 30b is so constructed to allow the latching means 20 to move forward or backward while being retracted or extended so that the latching means 20 can be placed on or released from the latching step 12.

Furthermore, the casing 30 is provided with a first through hole through which the shift lock cable 50 is passed, a second through hole through which the key lock cable 60 is passed, and a third through hole through which the free end of the stopper pin 22 of the latching means 20 can protrude toward the break pedal 70. The casing 30 is also provided with a plurality of fastening brackets so as to be fastened onto the vehicular chassis.

A shift lock pin 40 is formed in such a manner that it may be moved backward by a contact force of a shift lever 80 or be moved forward by an opposite elastic force of a third spring 41.

The forward or backward movement of the shift lock pin 40 takes place in cooperation with the rotation of the lock cam 10 via the shift lock cable, thereby locking the shift lever 80 in a parking position when the shift lock pin 40 is in a forward position F, but releasing the shift lever 80 to allow to shift from the parking position into another position in the speed change range when the shift lock pin 40 is in a backward position B.

In other respect, when the break pedal 70 is engaged, the latching means 20 moves forward to the pedal stopper 72 to place out of the latching step 12 of the lock cam 10, allowing the lock cam 10 to be pivoted into the unlatched state U.

In this case, if a vehicular driver manipulates the shift lever 80, the shift lock pin 40 is moved backward by the contact force of the shift lever 80 which is transmitted through the shift lock cable 50 to the lock cam 10, so that the lock cam 10 can be pivoted into the unlatched state U.

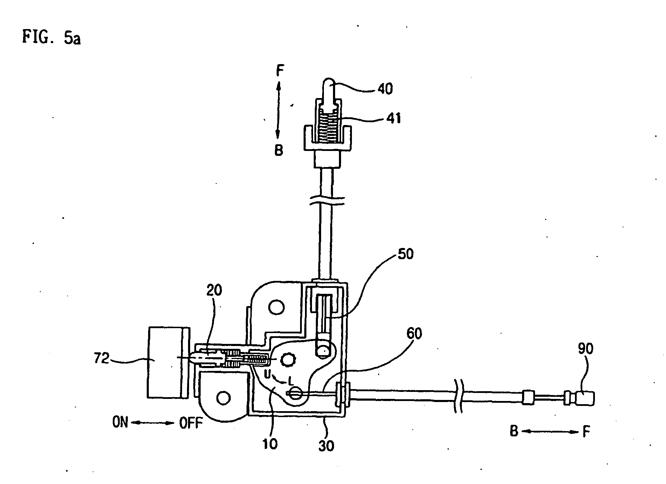

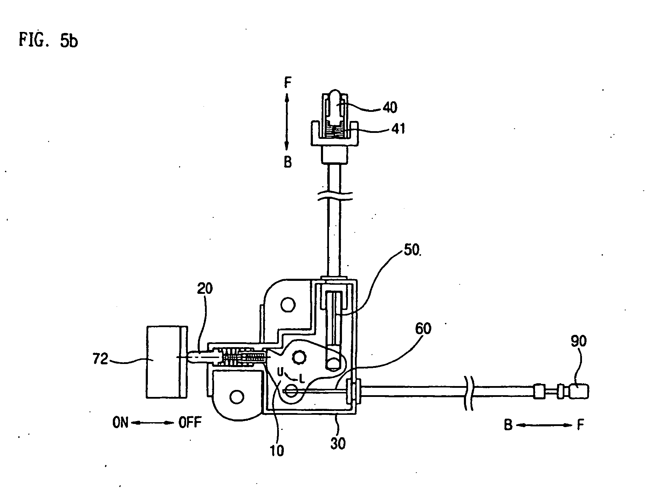

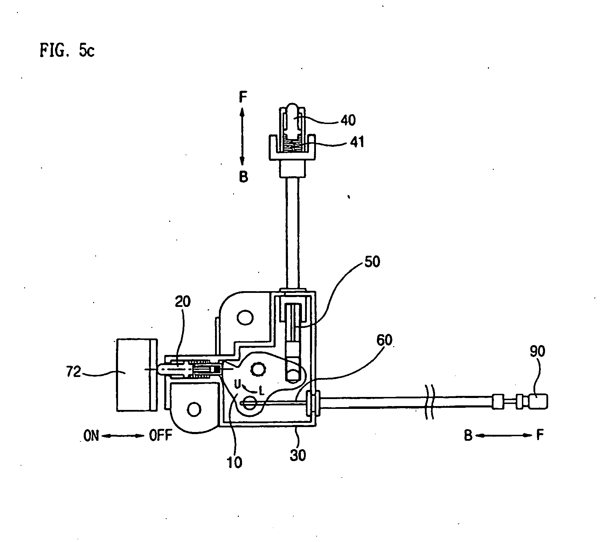

As shown in Fig 5, when the lock cam 10 is in the latched state L, the shift lock cable 50 and the key lock cable 60 are kept in their respective forward position F, while the latching means 20 is kept in the backward position B. On the contrary, when the lock cam 10 is in the unlatched state U, the shift lock cable 50 and the key lock cable 60 are kept in their respective backward position B, while the latching means 20 is kept in the forward position F when considering the position of the cylinder 24 as a reference point.

When the shift lock cable 50 is in the forward position F, the shift lock pin 40 constrains the shift lever 80 from pivoting so that the shift lever is prevented from shifting from the parking position to another position in the speed change range. When the key lock cable 60 is in the forward position F, a cylinder 92 of a key unit 90 is moved toward a key lock block 94 so that the key can be kept drawn back from the key unit 90.

The operations of the preferred embodiments according to the present invention will be described below. Figs. 5a to 5c shows operations of the shift locking apparatus shown in Fig. 2.

Referring to Fig. 5a, the break pedal 70 is disengaged and the speed change range is held in the parking position. The pedal stopper 72 presses down the latching means 20 so that the lock cam 10 is prevented from being pivoted from the latched state L into the unlatched state U by the latching means 20 stepped on the latching step 12.

As a result of this, the shift lock pin 40 connected to the lock cam 10 via the shift lock cable 50 cannot be moved into the backward position B. Therefore, the shift lever 80 is prevented from shifting from the parking position to another position in the speed change range.

In this case, only the first spring 23 is retracted, while the second spring 25 is extended. The second spring 25 has a spring constant larger than the first spring 23.

In Fig. 5b, the driver steps on the break pedal 70 into the engaged state and manipulates the shift lever 80 to press the shift lock pin 40 into the backward position B.

The latching means 20 moves into the forward position by the elastic force of the first spring 23 so that the lock cam 10 can be pivoted, and thus it is possible for the shift lock pin 40 to move toward the backward position.

When a driver manipulates the shift lever 80 to apply the contact force toward the backward position, both the shift lock pin 40 and the shift lock cable 50 move backward, the lock cam 10 is pivoted into the unlatched state U and the shift lever 80 is allowed to shift from the parking position into another position in the speed change range. In addition, the key lock cable 60 is moved into the backward position by the pivotal movement of the lock cam 10 so that the key is prevented from escaping out of place.

In this case, both the first spring 23 and the second spring are in the extended state.

In Fig. 5c, the driver steps off the break pedal 70 to be in the disengaged state and the lock cam 10 remains in the unlatching state U. The stopper pin 22 of the latching means 20 is pressed down by the pedal stopper 72 to move into the backward position.

However, even though the stopper pin 22 is moved into the backward position, the cylinder 24 is maintained just the way it is without any movement. This results from the fact that the shift lock pin 40 is maintained in the backward position B by the shift lever 80 and thus the lock cam 10 is also maintained in the unlatched state U.

Therefore, the latching means 20 remains under the compression. Specifically, both the first and second springs 23 and 25 are in the retracted state.

If the driver manipulates the shift lever 80 again to be in the parking position, the shift lock pin 40 is moved into the forward position F by the elastic force of the third spring 41 and thus the lock cam 10 is pivoted into the latched state L, while the latching means 20 is moved backward by the elastic force of the second spring 25 to turn into the shift locking state again.

This shift locking apparatus for an automatic transmission according to the present invention does not require highly expensive components such as an electrical shift locking apparatus and has a relatively simple structure, and thus can save on overall production cost. In addition, the shift locking apparatus normally operates even when there happens an electrical trouble such as a battery discharge, thereby improving reliability and merchantability of products.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A shift locking apparatus for an automatic transmission, the shift locking apparatus comprising:
■ a lock cam (10) for connecting, along its circumference, to a shift lock cable (50) on one part, to a key lock cable (60) on another part, and having a third part provided with a latching step (12);
■ a latching means (20), allowed to move forward or backward by a contact force of a break pedal (70) or by an elastic force of at least one spring, for having at least another spring to perform retraction or extension and causing the latching step (12) of the lock cam (10) to be in a latched or unlatched state depending on an engaged or disengaged state of the break pedal (70) and on a pivotal movement of the lock cam (10);
■ a casing (30) housed by the lock cam (10) and the latching means (20) therein, for constraining the lock cam (10) within a pivotal angle of the latched state (L) or unlatched state (U) and restraining the latching means (20) to be in a retracted or extended state; and
■ a shift lock pin (40), allowed to move forward or backward by a contact force of a shift lever (80) or by an elastic force of at least one spring, for cooperating with the lock cam (10) via the shift lock cable (50) to lock or release the shift lever (80) in a parking position,
**characterized in that** the latching means (20) further comprises;
■ a stopper pin (22) for placing into a reverse or backward position (B) under the contact force from the break pedal (70) when the break pedal (70) is disengaged, but into a progressive or forward position (F) under the elastic force from the first spring (23) when the break pedal (70) is engaged; and
■ a cylinder (24) for housing a piston (26) which is integrally connected with the stopper pin (22), having a second spring (25), which has a spring constant larger than that of the first spring (23), disposed between a free end of the piston (26) and a closed end of the cylinder (24) opposite to the free end of the piston (26), whereby the cylinder (24) is provided with the elastic force of the second spring (25) toward the cam when the break pedal (70) is disengaged but moves toward together with the stopper pin (22) when the break pedal (70) is engaged.

2. A shift locking apparatus according to claim 1,
wherein the cylinder (24) causes the lock cam (10) to be in the latched or unlatched state depending on the pivotal movement of the lock cam (10).

3. A shift locking apparatus according to claim 1, wherein a distance which the stopper pin (22) is caused to travel together with the cylinder (24) by the elastic force of the first spring (23), is equal to that which the cylinder (24) is caused to travel by the elastic force of the second spring (25).

4. A shift locking apparatus according to claim 1, wherein the shift lock pin (40) is provided with the elastic force directing it to the forward position by a third spring and with the contact force directing the shift lock pin (40) to the backward position by a shift lever (80).

5. A shift locking apparatus according to claim 4, wherein the lock cam (10) is pivoted into the latched state when the shift lock pin (40) is in the forward position but into the unlatched state when the shift lock pin (40) is in the backward position.

6. A shift locking apparatus according to claim 1, wherein the shift lock pin (40) causes the shift lever (80) to be locked in a parking position when the shift lock pin (40) is in the forward position but to be movably released in another position in a speed change range when the shift lock pin (40) is in the backward position.

7. A shift locking apparatus according to claim 1, wherein the lock cable is connected to a key unit, allowing the lock cam (10) to be pivoted from the latched state into the unlatched state only when the key unit is operated to put a key out of a locked position.

8. A shift locking apparatus according to claim 1, wherein the lock cable is connected to a key unit, allowing to put a key into a locked position by transmitting the latched state of the lock cam (10) into the key unit.

## Patentansprüche

1. Schaltsperrvorrichtung für ein Automatikgetriebe, wobei die Schaltsperrvorrichtung aufweist:
einen Sperrnocken (10) zum Verbinden mit einem Schaltsperrseil (50) an einem Abschnitt und mit einem Schlüsselsperrseil (60) an einem anderen Abschnitt entlang seinem Umfang, und aufweisend einen dritten Abschnitt, der mit einer Raststufe (12) versehen ist;
ein Rastmittel (20), das durch eine Kontaktkraft eines Bremspedals (70) oder durch eine Federkraft wenigstens einer Feder vor oder zurück bewegt werden kann, damit wenigstens eine andere Feder die Einziehung oder Ausziehung durchführt und bewirkt wird, dass die Raststufe (12) des Sperrnockens (10) in Abhängigkeit von einem Einrück- oder Ausrückzustand des Bremspedals (70) und einer Schwenkbewegung des Sperrnockens (10) in einem Einrast- oder Ausrastzustand sein kann;
ein Gehäuse (30), in dem der Sperrnocken (10) und das Rastmittel (20) zum Beschränken des Sperrnockens (10) innerhalb eines Schwenkwinkels des Einrastzustands (L) oder des Ausrastzustands (U) und Zurückhalten des Rastmittels (20) in einem Ein- oder Ausziehzustand untergebracht ist; und
einen Schaltsperrbolzen (40), der durch eine Kontaktkraft eines Schalthebels (80) oder durch eine Federkraft wenigstens einer Feder vor oder zurück bewegt werden kann, zum Zusammenwirken mit dem Sperrnocken (10) über das Schaltsperrseil (50), um den Schalthebel (80) in einer Parkposition zu verriegeln oder zu lösen,
**dadurch gekennzeichnet, dass** das Rastmittel (20) ferner aufweist:
einen Anschlagbolzen (22) zum Platzieren in eine Umkehr- oder Rückwärtsposition (B) unter der Kontaktkraft von dem Bremspedal (70), wenn das Bremspedal (70) ausgerückt ist, jedoch in eine Fortschritt- oder Vorwärtsposition (F) unter der Federkraft von der ersten Feder (23), wenn das Bremspedal (70) eingerückt ist; und
einen Zylinder (24) zum Aufnehmen eines Kolbens (26), welcher einstückig mit dem Anschlagbolzen (22) verbunden ist, aufweisend eine zweite Feder (25), welche eine Federkonstante größer als die der ersten Feder (23) hat und zwischen einem freien Ende des Kolbens (26) und einem dem freien Ende des Kolbens (26) gegenüberliegenden, geschlossenen Ende des Zylinders (24) angeordnet ist, wodurch der Zylinder (24) mit der Federkraft der zweiten Feder (25) in Richtung zu dem Nocken versehen ist, wenn das Bremspedal (70) ausgerückt ist, sich jedoch in Richtung zu dem Anschlagbolzen (22) zusammen mit diesem bewegt, wenn das Bremspedal (70) eingerückt ist.

2. Schaltsperrvorrichtung nach Anspruch 1, wobei der Zylinder (24) bewirkt, dass der Sperrnocken (10) in Abhängigkeit von der Schwenkbewegung des Sperrnockens (10) in dem Einrast- oder Ausrastzustand sein kann.

3. Schaltsperrvorrichtung nach Anspruch 1, wobei eine Entfernung, welche durch die Bewegung des Anschlagbolzens (22) zusammen mit dem Zylinder (24) mittels der Federkraft der ersten Feder (23) bewirkt wird, gleich jener ist, welche durch die Bewegung des Zylinders (24) mittels der Federkraft der zweiten Feder (25) bewirkt wird.

4. Schaltsperrvorrichtung nach Anspruch 1, wobei der Schaltsperrbolzen (40) mit der Federkraft, die diesen in die Vorwärtsrichtung durch eine dritte Feder ausrichtet, und mit der Kontaktkraft, die den Schaltsperrbolzen (40) in die Rückwärtsrichtung durch einen Schalthebel (80) ausrichtet, versehen ist.

5. Schaltsperrvorrichtung nach Anspruch 4, wobei der Sperrnocken (10) in den Einrastzustand geschwenkt ist, wenn der Schaltsperrbolzen (40) in der Vorwärtsposition ist, jedoch in den Ausrastzustand geschwenkt ist, wenn der Schaltsperrbolzen (40) in der Rückwärtsposition ist.

6. Schaltsperrvorrichtung nach Anspruch 1, wobei der Schaltsperrbolzen (40) bewirkt, dass der Schalthebel (80) in einer Parkposition verriegelt werden kann, wenn der Schaltsperrbolzen (40) in der Vorwärtsposition ist, jedoch in einer anderen Position in einem Gangwechselbereich bewegbar gelöst werden kann, wenn der Schaltsperrbolzen (40) in der Rückwärtsposition ist.

7. Schaltsperrvorrichtung nach Anspruch 1, wobei das Sperrseil mit einer Schlüsseleinheit verbunden ist, die es ermöglicht, dass der Sperrnocken (10) von dem Einrastzustand in den Ausrastzustand nur geschwenkt werden kann, wenn die Schlüsseleinheit betätigt wird, um einen Schlüssel aus einer Verriegelungsposition auszustellen.

8. Schaltsperrvorrichtung nach Anspruch 1, wobei das Sperrseil mit einer Schlüsseleinheit verbunden ist, die es ermöglicht, dass ein Schlüssel in eine Verriegelungsposition eingestellt werden kann, indem der Einrastzustand des Sperrnockens (10) an die Schlüsseleinheit übertragen wird.

## Revendications

1. Appareil de verrouillage de changement de vitesse pour boîte de vitesse automatique, l'appareil de verrouillage de changement de vitesse comprenant :
* une came de verrouillage (10) destinée à se raccorder, sur sa circonférence, à un câble de verrouillage de changement de vitesse (50) d'une part, et à un câble de verrouillage à clé (60) d'autre part et comportant une troisième partie dotée d'un pas de verrouillage (12) ;
* un moyen de verrouillage (20) pouvant avancer ou reculer sous l'effet d'une force de contact d'une pédale de frein (70) ou sous l'effet d'une force élastique d'au moins un ressort, destiné à disposer d'au moins un autre ressort capable de se rétracter ou de se détendre, et provoquant le verrouillage ou le déverrouillage du pas de verrouillage (12) de la came de verrouillage (10), selon que la pédale de frein (70) se trouve en position engagée ou désengagée et que la came de verrouillage (10) effectue un mouvement pivotant ;
* un carter (30) abritant la came de verrouillage (10) et le moyen de verrouillage (20) situé à l'intérieur, destiné à contraindre la came de verrouillage (10) dans un angle de pivotement correspondant à la position verrouillée (L) ou à la position déverrouillée (U) et empêchant le moyen de verrouillage (20) de se rétracter ou de se détendre ; et
* une tige de verrouillage de changement de vitesse (40) pouvant avancer ou reculer sous l'effet d'une force de contact d'un levier de vitesse (80) ou sous l'effet d'une force élastique d'au moins un ressort, destinée à coopérer avec la came de verrouillage (10) par l'intermédiaire du câble de verrouillage de changement de vitesse (50) pour verrouiller ou libérer le levier de changement de vitesse (80) en position de stationnement,
**caractérisé en ce que** le moyen de verrouillage (20) comprend en outre :
* une tige d'arrêt (22) placée en position de marche arrière ou de recul (B) sous l'effet de la force de contact de la pédale de frein (70), lorsque la pédale de frein (70) est désengagée, mais en position de marche avant ou progressive (F) sous l'effet de la force élastique du premier ressort (23), lorsque la pédale de frein (70) est engagée ; et
* un cylindre (24) destiné à abriter un piston (26) solidairement relié à la tige d'arrêt (22), comportant un second ressort (25), qui a une constante de ressort supérieure à celle du premier ressort (23), disposé entre une extrémité libre du piston (26) et une extrémité fermée du cylindre (24) opposée à l'extrémité libre du piston (26), moyennant quoi la force élastique du second ressort (25) en direction de la came est communiquée au cylindre (24), lorsque la pédale de frein (70) est désengagée mais qui se déplace en direction de et avec la tige d'arrêt (22), lorsque la pédale de frein (70) est engagée.

2. Appareil de verrouillage de changement de vitesse selon la revendication 1, dans lequel le cylindre (24) verrouille ou déverrouille la came de verrouillage (10), selon le mouvement pivotant de la came de verrouillage (10).

3. Appareil de verrouillage de changement de vitesse selon la revendication 1, dans lequel la distance que la tige d'arrêt (22) doit parcourir en même temps que le cylindre (24) sous l'effet de la force élastique du premier ressort (23) est égale à celle que le cylindre
(24) doit parcourir sous l'effet de la force élastique du second ressort (25).

4. Appareil de verrouillage de changement de vitesse selon la revendication 1, dans lequel la tige de verrouillage de changement de vitesse (40) est mue par la force élastique qui la dirige vers la position de marche avant au moyen d'un troisième ressort et par la force de contact dirigeant la tige de verrouillage de changement de vitesse (40) vers la position de marche arrière au moyen d'un levier de vitesse (80).

5. Appareil de verrouillage de changement de vitesse selon la revendication 4, dans lequel la came de verrouillage (10) pivote en position verrouillée, lorsque la tige de verrouillage de changement de vitesse (40) se trouve en position de marche avant mais passe en position déverrouillée, lorsque la tige de verrouillage de changement de vitesse (40) se trouve en position de marche arrière.

6. Appareil de verrouillage de changement de vitesse selon la revendication 1, dans lequel la tige de verrouillage de changement de vitesse (40) verrouille le levier de vitesse (80) en position de stationnement, lorsque la tige de verrouillage de changement de vitesse (40) se trouve en position de marche avant, mais le libère de manière qu'il soit mobile dans une autre position d'une plage de changement de vitesses, lorsque la tige de verrouillage de changement de vitesse (40) se trouve en position de marche arrière.

7. Appareil de verrouillage de changement de vitesse selon la revendication 1, dans lequel le câble de verrouillage est relié à une unité de clé, qui permet à la came de verrouillage (10) de pivoter pour passer de la position verrouillée à la position déverrouillée, uniquement lorsque l'unité de clé agit pour déverrouiller une clé.

8. Appareil de verrouillage de changement de vitesse selon la revendication 1, dans lequel le câble de verrouillage est relié à une unité de clé, qui permet de verrouiller une clé en transmettant la position verrouillée de la came de verrouillage (10) dans l'unité de clé.
